# EUROPEAN PATENT SPECIFICATION

(11) **EP 2 749 463 B1**
(45) Date of publication and mention of the grant of the patent: **18.05.2016**
(21) Application number: 13199662.1
(22) Date of filing: 27.12.2013
(51) Int. Cl.: B60T 7/06, B60R 21/09

(54) **Pedal device**
Pedalvorrichtung
Dispositif de pédale

(30) Priority: 28.12.2012 JP 2012288354
(43) Date of publication of application: 02.07.2014
(73) Proprietor: F-TECH INC., Kuki-City Saitama 3460194 (JP)
(72) Inventor: Sato, Jun, Tochigi 3213325 (JP); Ogawa, Kazuo, Tochigi 3213325 (JP)
(74) Representative: Weickmann & Weickmann PartmbB

(56) References cited:
- EP-A1- 1 365 303
- JP-A- 2008 015 907
- JP-A- 2008 090 381
- US-A- 5 078 024
- US-A- 6 151 985

## Description

### BACKGROUND OF THE INVENTION

The present invention relates to a pedal device, and more particularly relates to a pedal device incorporated in a vehicle such as an automobile, in which the posture of a pedal arm can be controlled at the time of a collision of the vehicle.

In recent years, in a pedal device such as a brake pedal device attached to a vehicle such as an automobile, to suppress disadvantages such that the pedal device moves back to interfere with a leg of a passenger such as a driver unnecessarily due to deformation of a vehicle body at the time of a frontal collision of the vehicle, there has been proposed to adopt such a configuration that a part of the pedal device is caused to drop or to shift forward.

Under such circumstances, Japanese Patent Application Laid-open Publication No. 2008-90381 discloses an invention that relates to an operation pedal device of a vehicle, in which at the time of moving back and deformation of a dashboard panel 3, a pivot 13 is shifted rearward to prevent approach of a treadle portion of an operation pedal 10 to a driver, and in order to be able to maintain the state at the time of spring back of respective parts, when a control lever 21 abuts on a stopper member 23 and rotates with moving back and deformation of the dashboard panel 3, the pivot 13 fractures a retention wall 24 by an excessive load F2 applied from the lever 21 to move rearward in a long hole 25, and at this time, a locking surface 29 that engages with a front surface of the pivot 13 to lock a return rotation of the control lever 21 is formed in the control lever 21.

### SUMMARY OF THE INVENTION

However, according to the studies performed by the present inventors, in Japanese Patent Application Laid-open Publication No. 2008-90381, the control lever 21 is supported by a support shaft 19 separately provided from the pivot 13 of the operation pedal 10, and is held by a support piece 26 and a rivet 27. Furthermore, because the fracturable retention wall 24 needs to be provided with respect to the pivot 13 of the operation pedal 10, the configuration thereof tends to be cumbersome.

Further, according to the studies performed by the present inventors, in Japanese Patent Application Laid-open Publication No. 2008-90381, when the operation pedal 10 assumes a receding posture, if the control lever 21 can recede so as not to interfere with a vehicle body side unnecessarily, deformation of the vehicle body can be performed smoothly, which is more desirable. However, such a configuration is not disclosed in Japanese Patent Application Laid-open Publication No. 2008-90381.

The present invention has been achieved in view of the above studies, and an object of the present invention is to provide a pedal device that can cause a pedal arm reliably to recede from a passenger side such as a driver at the time of a frontal collision or the like of a vehicle, and can cause a retainer to recede, which is a control member for realizing a receding posture of the pedal arm from the vehicle body side.

To achieve the above object, a first aspect of the present invention is to provide a pedal device comprising: a pedal bracket that has a first guide hole as an elongated one, and attached to a vehicle body; a retainer that has a second guide hole as an elongated one and an engaging portion and is engaged and attached to the pedal bracket by the engaging portion; and a pedal arm that has an arm body attached with one end of a pushrod coupled with the vehicle body side, a through hole provided at an upper end portion of the arm body, a treadle portion provided at a lower end portion of the arm body, and a shaft member inserted into the through hole, the first guide hole, and the second guide hole, and is rotatable about the shaft member as a rotation axis, wherein the first guide hole is provided with: a leading end hole portion that defines a position of the shaft member for realizing a normal operating state with respect to the pedal arm; a terminal end hole portion that defines the position of the shaft member for realizing a receding state where the treadle portion relatively moves in a forward direction of the vehicle body with respect to the pedal arm; and a connecting hole portion that connects the leading end hole portion and the terminal end hole portion so that the shaft member can freely move, and allows the pedal arm to rotate around the other end side of the pushrod so that the treadle portion relatively moves in the forward direction, as the shaft member moves from the leading end hole portion side to the terminal end hole portion side, and wherein the second guide hole is provided with: a first hole portion extending in a front-rear direction of the vehicle body so as to allow the retainer to relatively move in the forward direction so that the engaging portion is released from the pedal bracket in a state with the shaft member being positioned in the leading end hole portion; and a second hole portion connected to the first hole portion so as to allow the retainer to rotate about the shaft member so that the forward direction side of the retainer moves in a downward direction of the vehicle body, while the shaft member is moved from the leading end hole portion to the terminal end hole portion.

According to a second aspect of the present invention, in addition to the first aspect, in the normal operating state of the pedal arm, when an upper part of the retainer is in a protruding state from an opening portion provided in an upper wall of the pedal bracket in an upward direction of the vehicle body, and the forward direction side of the retainer moves in the downward direction, a first guide portion provided in an upper part of the retainer can freely slide, while abutting on an end portion on the forward direction side of the opening portion.

According to a third aspect of the present invention, in addition to the second aspect, when the forward direction side of the retainer moves in the downward direction, a second guide portion provided on a rearward direction side of the vehicle body than the first guide portion in the retainer can be freely engaged to a flange provided at an end portion on the rearward direction side of the opening portion of the pedal bracket.

According to a fourth aspect of the present invention, in addition to any of the first to third aspects, when the shaft member is positioned in the second hole portion of the second guide hole in the retainer and the leading end hole portion of the first guide hole in the pedal bracket, the treadle portion of the pedal arm is positioned at a position in the most forward direction and the retainer is in a state of being receding farthest inside the pedal bracket..

According to a fifth aspect of the present invention, in addition to any of the first to fourth aspects, the retainer includes a first engaging portion that engages an upper front end of the pedal bracket and a second engaging portion that engages an upper rear end of the pedal bracket.

According to a sixth aspect of the present invention, in addition to the fifth aspects, the second engaging portion has a connecting member provided to stand up in a vertical direction of the vehicle body while extending in a horizontal direction, to engage a rear end portion of the upper wall of the pedal bracket by a lower end portion of the connecting member.

According to a seventh aspect of the present invention, in addition to any of the first to sixth aspects, the shaft member has a flat portion in which a part of a circular shape is flattened in a sectional shape of the shaft member penetrating through the first guide hole and the second guide hole.

According to an eighth aspect of the present invention, in addition to any of the first to seventh aspects, the pedal bracket further includes a restricting member that restricts the shaft member to move in an upward direction of the vehicle body exceeding the leading end hole portion.

According to the configuration of the first aspect of the present invention, the first guide hole provided in the pedal bracket attached to the vehicle body includes the leading end hole portion that defines the position of the shaft member for realizing the normal operating state with respect to the pedal arm, the terminal end hole portion that defines the position of the shaft member for realizing the receding state where the treadle portion relatively moves in the forward direction of the vehicle body with respect to the pedal arm, and the connecting hole portion that connects the leading end hole portion and the terminal end hole portion so that the shaft member can freely move, and allows the pedal arm to rotate around the other end side of the pushrod so that the treadle portion relatively moves in the forward direction, as the shaft member moves from the leading end hole portion side to the terminal end hole portion side. The second guide hole provided in the retainer engaged and attached to the pedal bracket by the engaging portion includes the first hole portion and the second hole portion connected to each other. The first hole portion extends in the front-rear direction of the vehicle body so as to allow the retainer to relatively move in the forward direction so that the engaging portion is released from the pedal bracket in the state with the shaft member being positioned in the leading end hole portion. The second hole portion allows the retainer to rotate about the shaft member so that the forward direction side of the retainer moves in the downward direction of the vehicle body, while the shaft member is moved from the leading end hole portion to the terminal end hole portion. Consequently, at the time of a frontal collision or the like of a vehicle, the pedal arm can reliably recede from a passenger side such as a driver, and the retainer, which is the control member for realizing the receding posture of the pedal arm, can be recede from the vehicle body side, in a simple configuration in which the first guide hole and the second guide hole can cooperate with each other.

According to the configuration of the second aspect of the present invention, in the normal operating state of the pedal arm, when the upper part of the retainer is in the protruding state from the opening portion provided in the upper wall of the pedal bracket in the upward direction of the vehicle body, and the forward direction side of the retainer moves in the downward direction, the first guide portion provided in the upper part of the retainer can freely slide, while abutting on the end portion on the forward direction side of the opening portion. Consequently, at the time of a frontal collision or the like of the vehicle, the behavior of causing the retainer to recede from the vehicle body side can be reliably generated.

According to the configuration of the third aspect of the present invention, when the forward direction side of the retainer moves in the downward direction, the second guide portion provided on the rearward direction side of the vehicle body than the first guide portion in the retainer can be freely engaged to the flange provided at the end portion on the rearward direction side of the opening portion of the pedal bracket. Consequently, at the time of a frontal collision or the like of the vehicle, the behavior of causing the retainer to recede from the vehicle body side can be reliably accelerated.

According to the configuration of the fourth aspect of the present invention, when the shaft member is positioned in the second hole portion of the second guide hole in the retainer and the terminal end hole portion of the first guide hole in the pedal bracket, the treadle portion of the pedal arm is positioned at the position in the most forward direction and the retainer is in the state of being receded farthest inside the pedal bracket. Consequently, at the time of a frontal collision or the like of the vehicle, the retainer can be reliably receded from the vehicle body side in the state with the pedal arm being reliably receded from a passenger side such as a driver.

According to the configuration of the fifth aspect of the present invention, because the retainer includes the first engaging portion that engages the upper front end of the pedal bracket and the second engaging portion that engages the upper rear end of the pedal bracket, in the normal operating state of the pedal arm, the retainer can be fixed to the pedal bracket strongly and more reliably, thereby enabling to realize an accurate operation of the pedal arm reliably.

According to the configuration of the sixth aspect of the present invention, the second engaging portion has the connecting member provided to stand up in the vertical direction of the vehicle body while extending in the horizontal direction, to engage the rear end portion of the upper wall of the pedal bracket by the lower end portion of the connecting member. Consequently, in the normal operating state of the pedal arm, the retainer can be fixed to the pedal bracket strongly and more reliably, while reinforcing the strength and stiffness of the retainer, thereby enabling to realize an accurate operation of the pedal arm more reliably.

According to the configuration of the seventh aspect of the present invention, the shaft member has the flat portion in which a part of the circular shape is flattened in the sectional shape of the shaft member penetrating through the first guide hole and the second guide hole. Consequently, in the normal operating state of the pedal arm, the retainer can be pressed against and fixed to the pedal bracket strongly and more reliably, thereby enabling to realize an accurate operation of the pedal arm more reliably.

According to the configuration of the eighth aspect of the present invention, by providing the restricting member that restricts the shaft member to move in the upward direction of the vehicle body exceeding the leading end hole portion, in the normal operating state of the pedal arm, the shaft member canbe held more reliably, thereby enabling to realize an accurate operation of the pedal arm more reliably. Furthermore, at the time of a frontal collision or the like of the vehicle, it is reliably suppressed that the shaft member moves upward unnecessarily, and the pedal arm can recede from a passenger side such as a driver more reliably, and the retainer can recede from the vehicle body side reliably.

### BRIEF DESCRIPTION OF THE DRAWINGS

FIG. 1 is a side view of a pedal device according to an embodiment of the present invention;
FIG. 2 is a diagram as viewed from a direction of an arrow X in FIG. 1;
FIG. 3 is a sectional view along a line A-A in FIG. 1;
FIG. 4 is a sectional view along a line B-B in FIG. 1;
FIG. 5 is a sectional view along a line C-C in FIG. 1;
FIG. 6 is a side view showing an operation of the pedal device according to the embodiment at the time of a collision of a vehicle, and shows a state immediately after the collision of the vehicle;
FIG. 7 is a side view showing an operation of the pedal device according to the embodiment at the time of a collision of a vehicle, and shows a state subsequent to that shown in FIG. 6;
FIG. 8 is a side view showing an operation of the pedal device according to the embodiment at the time of a collision of a vehicle, and shows a state subsequent to that shown in FIG. 7;
FIG. 9 is a side view showing an operation of the pedal device according to the embodiment at the time of a collision of a vehicle, and shows a state subsequent to that shown in FIG. 8;
FIG. 10 is a side view showing an operation of the pedal device according to the embodiment at the time of a collision of a vehicle, and shows a state subsequent to that shown in FIG. 9;
FIG. 11 is a side view showing an operation of the pedal device according to the embodiment at the time of a collision of a vehicle, and shows a state subsequent to that shown in FIG. 10;
FIG. 12 is a side view showing an operation of the pedal device according to the embodiment at the time of a collision of a vehicle, and shows a state subsequent to that shown in FIG. 11;
FIG. 13 is a side view showing an operation of the pedal device according to the embodiment at the time of a collision of a vehicle, and shows a state subsequent to that shown in FIG. 12;
FIG. 14 is a side view showing an operation of the pedal device according to the embodiment at the time of a collision of a vehicle, and shows a state subsequent to that shown in FIG. 13;

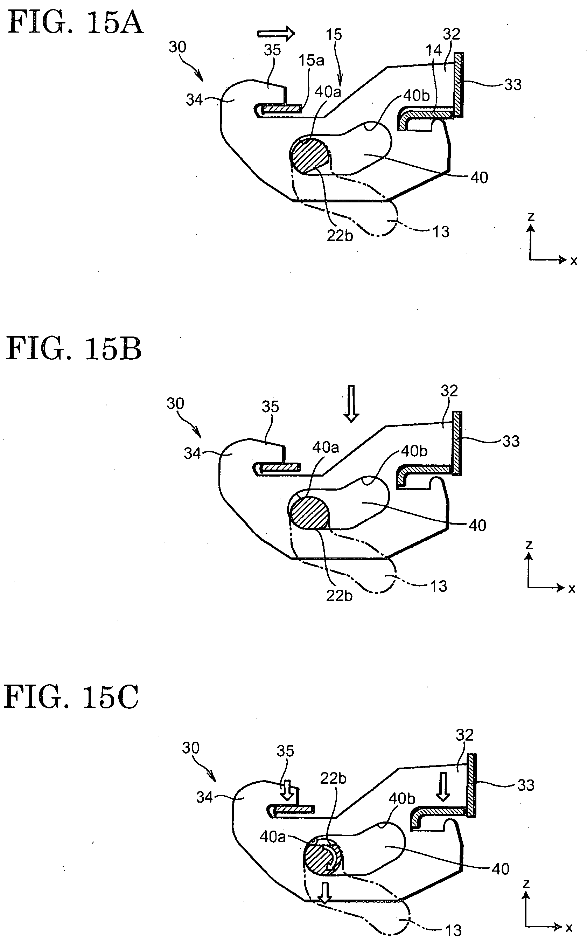

FIG. 15A is a schematic partial sectional view in order showing an assembly procedure of a pedal device according to a modification of the embodiment, and shows a state immediately before engaging a retainer to a pedal bracket, FIG. 15B is a schematic partial sectional view in order showing the assembly procedure of the pedal device according to the modification of the embodiment, and shows a state where the retainer is engaged to the pedal bracket, and FIG. 15C is a schematic partial sectional view in order showing the assembly procedure of the pedal device according to the modification of the embodiment, and shows a state where the retainer has been attached to the pedal bracket; and
FIG. 16A shows a configuration of a holding member of a pedal device according to another modification of the embodiment, and shows a side view of the holding member attached to a pedal bracket, and FIG. 16B shows a configuration of the holding member of the pedal device according to the another modification of the present embodiment, and shows a sectional view along a line D-D in FIG. 16A.

### DETAILED DESCRIPTION OF THE PREFERRED EMBODIMENT

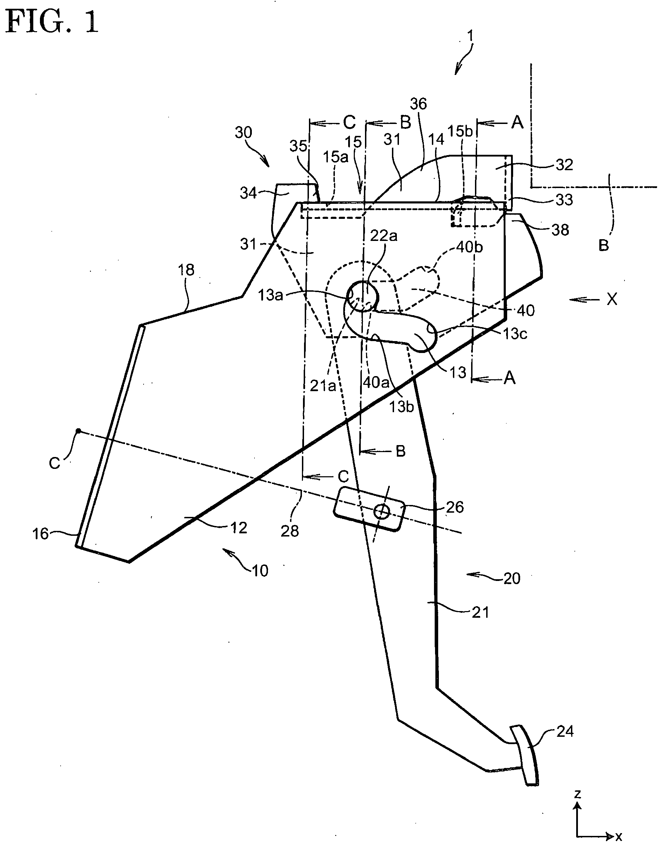

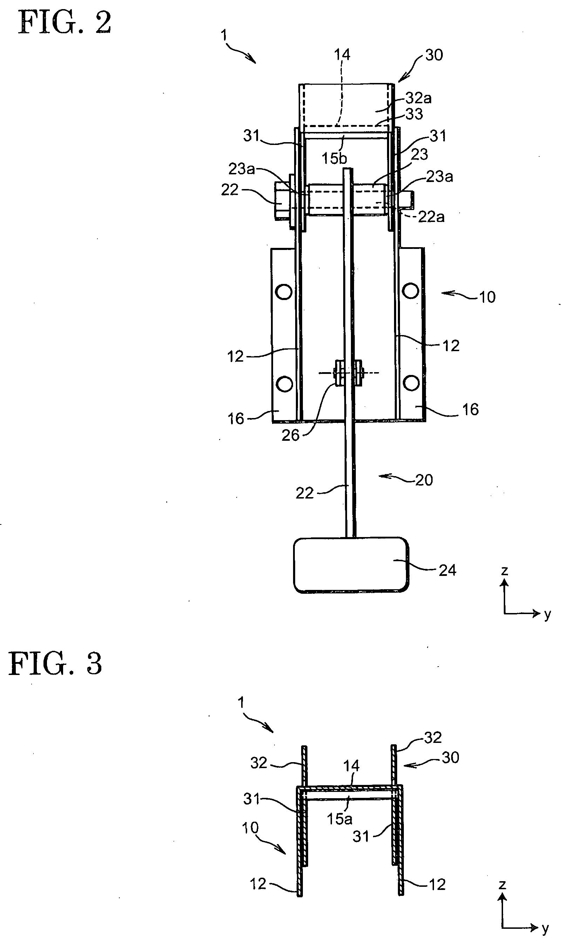

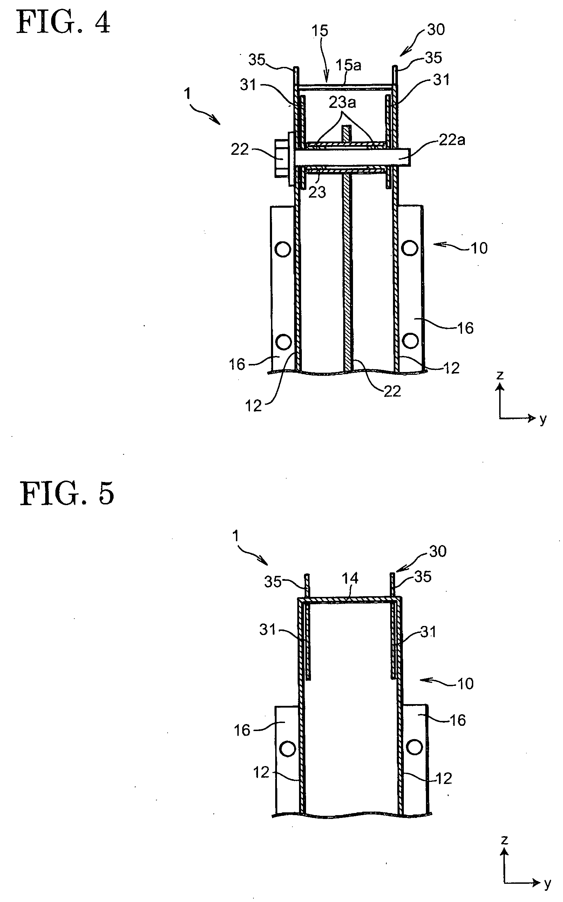

A pedal device according to an embodiment of the present invention is explained in detail below with reference to the accompanying drawings. In the drawings, an x-axis, a y-axis, and a z-axis constitute a three-axis orthogonal coordinate system. For convenience sake of explanation, it is assumed that a positive direction of an x-axis corresponds to a rear direction, a negative direction of the x-axis corresponds to a front direction, a positive direction of a z-axis corresponds to an upward direction, and a negative direction of the z-axis corresponds to a downward direction. In FIG. 1, for convenience sake, only a shaft is shown regarding a fastener such as a fastening bolt. In FIGS. 2 and 4, for convenience sake, a mating nut of the fastener such as a fastening bolt is not shown.

First, a configuration of the pedal device according to the present embodiment is explained in detail with reference to FIGS. 1 to 5.

FIG. 1 is a side view of the pedal device according to the present embodiment. FIG. 2 is a diagram as viewed from a direction of an arrow X in FIG. 1. FIG. 3 is a sectional view along a line A-A in Fig. 1. FIG. 4 is a sectional view along a line B-B in FIG. 1. FIG. 5 is a sectional view along a line C-C in FIG. 1.

As shown in FIGS. 1 to 5, a pedal device 1 is typically a brake pedal device of a vehicle, and includes a pedal bracket 10, a pedal arm 20 rotatably attached to the pedal bracket 10, and a retainer 30 rotatably attached to the pedal bracket 10, respectively made of metal such as an iron material.

Specifically, the pedal bracket 10 includes side walls 12, 12 facing each other in a y-axis direction, an upper wall 14 that connects upper parts of the side walls 12, 12, and attaching portions 16, 16 fixedly installed to a dashboard panel of a vehicle body (not shown) by a fastener such as a fastening bolt (not shown).

Guide holes 13, 13 respectively bored in the side walls 12, 12 in the y-axis direction are correspondingly formed. The guide hole 13 respectively includes a leading end hole portion 13a, a connecting hole portion 13b connected to the leading end hole portion 13a, and a terminal end hole portion 13c connected to the connecting hole portion 13b in the corresponding side wall 12. The terminal end hole portion 13c is arranged diagonally rearward with respect to the leading end hole portion 13a, and the connecting hole portion 13b substantially extends in a front-rear direction to connect the leading end hole portion 13a and the terminal end hole portion 13c smoothly.

An opening portion 15 bored in a vertical direction is formed in the upper wall 14, and it is desired that a flange 15b is formed at a rear end portion thereof, while being opposite to a front end portion 15a in the front-rear direction. The upper wall 14 can be a constituent member integrally formed with the side walls 12, 12 or a constituent member fixedly installed to the side walls 12, 12 by welding or the like.

The pedal arm 20 includes an arm body 21 rotatably attached to the pedal bracket 10, a treadle portion 24 fixedly installed to a lower part of the arm body 21, and a pushrod attaching portion 26 fixedly installed in the middle of the arm body 21.

A through hole 21a bored in the arm body 21 in the y-axis direction is formed in the upper part of the arm body 21.

A cylindrical collar 23 is inserted into and fixedly installed in the through hole 21a so as to extend in the y-axis direction.

Cylindrical bushes 23a, 23a made of resin such as plastic are respectively attached to the collar 23 correspondingly inward from opposite ends in the y-axis direction of the collar 23 along an inner circumference of the through hole. A shaft 22a of a fastener 22 penetrates through the collar 23 in a state of being inserted into the through hole of the collar 23 via the through holes of the bushes 23a, 23a. A flange may be formed on respective outer end portions of the bushes 23a, 23a positioned outside of the collar 23.

One end of a pushrod 28 is rotatably attached to the pushrod attaching portion 26, and the other end of the pushrod 28 is connected to a vehicle body side, typically, to a master vac. (not shown) fixedly installed to the vehicle body. A connection point at which the other end of the pushrod 28 is connected to the master vac. is schematically shown by a point C in FIG. 1.

The retainer 30 includes side walls 31, 31 facing each other in the y-axis direction, rear protrusions 32, 32 respectively provided correspondingly in rear upper parts of the side walls 31, 31, and front protrusions 34, 34 respectively provided correspondingly in front upper parts of the side walls 31, 31. The rear protrusions 32, 32 and the front protrusions 34, 34 can be respectively a constituent member integrally formed with the side walls 31, 31, or a constituent member in which another member is fixedly installed to the side walls 31, 31 by welding or the like.

The rear protrusions 32, 32 are connected by a tabular connecting member 32a provided to stand up, and a lower end portion of the connecting member 32a functions as an engaging portion 33. Respective front parts of the rear protrusions 32, 32 function as front guide portions 36, 36, which are downwardly inclined end portions. The connecting member 32a can be a constituent member integrally formed with the rear protrusions 32, 32, or a constituent member in which another member is fixedly installed to the rear protrusions 32, 32 by welding or the like. When strength and stiffness of the rear protrusions 32, 32 can be sufficiently ensured, the connecting member 32a does not need to be provided. In this case, the lower end portions of the rear protrusions 32, 32 respectively function as the engaging portion 33.

That is, the rear protrusions 32, 32 are provided in a protruding condition and extend on the upper wall 14 via the opening portion 15 in the upper wall 14 of the pedal bracket 10, and the engaging portion 33, which is the lower end portion of the connecting member 32a, is engaged to the rear end portion of the upper wall 14. The side wall 31 respectively includes rear guide portions 38, 38 facing the engaging portion 33 of the rear protrusion 32, 32 at the opposite ends of the y-axis via the upper wall 14 of the pedal bracket 10.

The front protrusions 34, 34 are provided in a protruding condition and extend on the upper wall 14 from the front end portion of the upper wall 14 via between connecting members 18, 18, which are respectively a part of the side walls 12, 12 that connect the upper wall 14 and the attaching portions 16, 16 in the pedal bracket 10, and rear end portions thereof function as engaging portions 35, 35 that abut on the upper surface of the upper wall 14 to engage the upper wall 14.

Guide holes 40, 40 respectively bored in the y-axis direction of the side walls 31, 31 are correspondingly formed therein. Each guide hole 40 includes a first hole portion 40a, and a second hole portion 40b connected to the first hole portion 40a in the corresponding side wall 31. The first hole portion 40a substantially extends in the front-rear direction, and the second hole portion 40b is smoothly connected to the first hole portion 40a and extends from the first hole portion 40a obliquely upward and rearward.

Next, an assembly method for assembling the pedal device 1 having the configuration described above is explained in detail.

To assemble the pedal device 1, the retainer 30 is inserted between the side walls 12, 12 of the pedal bracket 10, and the rear protrusions 32, 32 of the retainer 30 are pulled out so as to protrude on the upper wall 14 via the opening portion 15 in the upper wall 14 of the pedal bracket 10. Thereafter, the engaging portion 33, which is the lower end portion of the connecting member 32a that connects the rear protrusions 32, 32, is engaged to the rear end portion of the upper wall 14, and the front protrusions 34, 34 of the retainer 30 are pulled out so as to protrude on the upper wall 14 from the front end portion of the upper wall 14 via between the connecting members 18, 18, which are the part of the side walls 12, 12 that connect the upper wall 14 and the attaching portions 16, 16 in the pedal bracket 10, and the engaging portions 35, 35, which are rear end portions of the front protrusions 34, 34, are caused to abut on the upper surface of the upper wall 14 in a state of pressing the upper surface and are engaged to the upper wall 14. At this time, inner surfaces of the respective side walls 12, 12 of the pedal bracket 10 and outer surfaces of the respective side walls 31, 31 of the retainer 30 do not come in contact with each other, and a predetermined short gap is provided therebetween.

The pedal arm 20 provided with the collar 23, the treadle portion 24, and the pushrod attaching portion 26 is inserted between the side walls 31, 31 of the retainer 30 inserted between the side walls 12, 12 of the pedal bracket 10. At this time, the bushes 23a, 23a are correspondingly attached to the collar 23 respectively inward from the axially opposite ends, and respective outer end portions of the bushes 23a, 23a correspondingly abut on the inner surfaces of the side walls 31, 31 of the retainer 30.

The shaft 22a of the fastener 22, which is a fastening bolt or the like, is caused to pass from the negative direction to the positive direction of the y-axis sequentially, through respective insides of the guide hole 13 provided in the side wall 12 of the pedal bracket 10 in the negative y-axis direction, the guide hole 40 provided in the side wall 31 of the retainer 30 in the negative y-axis direction, the through hole of the bush 23a inserted into the end portion of the collar 23 of the pedal arm 20 in the negative y-axis direction, the through hole of the collar 23, the through hole of the bush 23a inserted into the end portion of the collar 23 of the pedal arm 20 in the positive y-axis direction, the guide hole 40 provided in the side wall 31 of the retainer 30 in the positive y-axis direction, and the guide hole 13 provided in the side wall 12 of the pedal bracket 10 in the positive y-axis direction. An apical end portion of the shaft 22a of the fastener 22 protruding from the guide hole 13 provided in the side wall 12 of the pedal bracket 10 in the positive y-axis direction is fastened by screwing a nut or the like (not shown), thereby assembling the pedal arm 20 and the retainer 30 to the pedal bracket 10.

At this time, the shaft 22a of the fastener 22 is at a position penetrating through the leading end hole portions 13a, 13a of the guide holes 13, 13 provided in the side walls 12, 12 of the pedal bracket 10 and the front end sides of the first hole portions 40a, 40a of the guide holes 40, 40 provided in the side walls 31, 31 of the retainer 30, and the position thereof does not move. The pedal arm 20 and the retainer 30 can be assembled initially instead of assembling the pedal bracket 10 and the retainer 30 initially. The shaft 22a of the fastener 22 can be inserted from the positive direction side of the y-axis, instead of being inserted from the negative direction side of the y-axis.

To assemble the pedal device 1 to the vehicle body, one end of the pushrod 28, whose other end is connected to the vehicle body side, typically to the master vac. fixedly installed to the vehicle body, is attached to the pushrod attaching portion 26 in the pedal arm 20, and the pedal bracket 10 is fixedly installed to the vehicle body by a fastening bolt or the like via the attaching portions 16, 16 thereof. In the pedal device 1 assembled to the vehicle body in this manner, the connecting member 32a of the rear protrusions 32, 32 of the retainer 30 faces a constituent member B of the vehicle body typically such as a attaching member of a steering column with a predetermined gap.

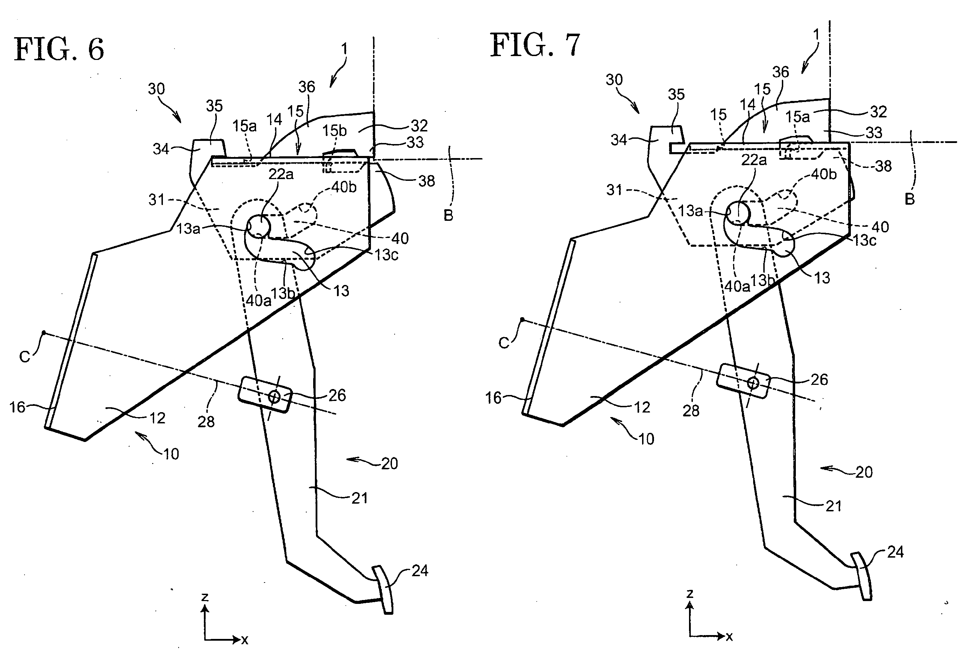

Next, an operation of the pedal device 1 having the configuration described above at the time of a collision of a vehicle is explained in detail with reference to FIGS. 6 to 14 in addition to FIGS. 1 to 5. For convenience sake, only the shaft of the fastener such as the fastening bolt is shown in FIGS. 6 to 14.

FIGS. 6 to 14 are side views in order showing an operation of the pedal device according to the present embodiment at the time of a collision of a vehicle, and show a process in which the pedal arm recedes while the retainer is receding sequentially in time series.

First, in an operation at the time of a normal operation prior to the operation of the pedal device 1 at the time of a collision of the vehicle, when a driver of the vehicle presses hard on the treadle portion 24 of the pedal arm 20, the arm body 21 rotates around the shaft 22a of the fastener 22 as a rotation axis, and corresponding thereto, the pushrod 28 is moved forward to actuate a brake system of the vehicle. At this time, as shown in FIGS. 1 to 5, the shaft 22a is in a state of penetrating through the leading end hole portions 13a, 13a of the guide holes 13, 13 of the pedal bracket 10 and the front end portion sides of the first hole portions 40a, 40a of the guide holes 40, 40 of the retainer 30. The engaging portion 33, which is the lower end portion of the connecting member 32a that connects the rear protrusions 32, 32 of the retainer 30, is in a state of being engaged to the rear end portion of the upper wall 14 of the pedal bracket 10, and the engaging portions 35, 35, which are the rear end portions of the front protrusions 34, 34 of the retainer 30, are caused to abut on the upper surface of the upper wall 14, respectively, and in a state of pressing the upper wall 14 and being engaged thereto.

When a vehicle has a frontal collision, typically, deformation generated at the front of the vehicle body propagates to a rear part thereof to deform a dashboard panel rearward. Therefore, as shown in FIG. 6, the pedal device 1 relatively moves rearward, and the connecting member 32a of the rear protrusions 32, 32 of the retainer 30 comes in contact with the constituent member B of the vehicle body, and starts to be pressed. Accordingly, the retainer 30 starts to be moved forward relative to the pedal bracket 10. At this time, because the engaging portion 33 of the connecting member 32a of the rear protrusions 32, 32 is disengaged from the rear-side end portion of the upper wall 14 of the pedal bracket 10 to which the engaging portion 33 has been engaged, the lower surface of the engaging portion 33 tends to slide forward relatively while abutting on the upper surface of the upper wall 14, and the engaging portions 35, 35 of the front protrusions 34, 34 are changed, respectively, from a state of pressing the upper surface of the upper wall 14 to a state of being simply mounted thereon. Accordingly, the lower surfaces of the engaging portions 35, 35 tend to slide forward relatively, while abutting on the upper surface of the upper wall 14. In the process so far, the shaft 22a is substantially maintained in such a state that the shaft 22a penetrates through the leading end hole portions 13a, 13a of the guide holes 13, 13 of the pedal bracket 10 and the front end sides of the first hole portions 40a, 40a of the guide holes 40, 40 of the retainer 30.

Subsequently, as shown in FIG. 7, when the connecting member 32a of the rear protrusions 32, 32 of the retainer 30 is further pressed forward by the constituent member B of the vehicle body, the front guide portions 36, 36 of the rear protrusions 32, 32 start to abut on the front end portion 15a of the opening portion 15 of the upper wall 14. Accordingly, the forward direction side of the retainer 30 is pressed so as to move in a downward direction by a reaction force thereof, and the retainer 30 relatively moved forward starts to rotate about a central axis extending in the y-axis direction of the shaft 22a of the fastener 22, which is moved rearward from the front end sides of the first hole portions 40a, 40a of the guide holes 40, 40 of the retainer 30, as a rotation axis. At this time, the lower surface of the engaging portion 33 of the connecting member 32a of the rear protrusions 32, 32 relatively slides forward while abutting on the upper surface of the upper wall 14, and the upper surfaces of the rear guide portions 38, 38 of the rear protrusions 32, 32 start to slide forward relatively while abutting on the lower surface of the upper wall 14. In conjunction therewith, at this time, the engaging portions 35, 35 of the front protrusions 34, 34 are completely disengaged and separated from the upper surface of the upper wall 14. A collision load to be applied to the retainer 30 is significantly larger than a static friction force generated between the fastener 22 and the side walls 12, 12 of the pedal bracket 10 due to a fastening torque of the fastener 22. However, because a force component to be applied to the shaft 22a via the peripheries of the first hole portions 40a, 40a of the guide holes 40, 40 of the retainer 30 is smaller than the static friction force, the shaft 22a is not released to move from the leading end hole portions 13a, 13a toward the connecting hole portions 13b, 13b in the guide holes 13, 13 of the pedal bracket 10.

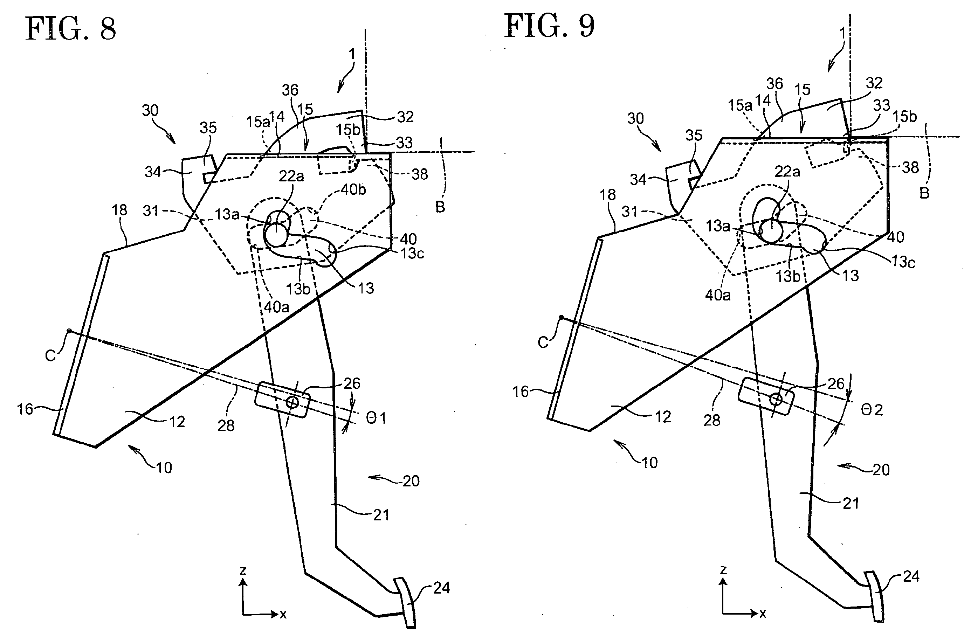

Subsequently, as shown in FIG. 8, when the connecting member 32a of the rear protrusions 32, 32 of the retainer 30 is pressed forward further by the constituent member B of the vehicle body, the front guide portions 36, 36 of the rear protrusions 32, 32 are pressed to slide downward while abutting on the front end portion 15a of the opening portion 15 of the upper wall 14, and the retainer 30 rotates so that the forward direction side of the retainer 30 moves downward further. The retainer 30 then starts to recede to between the side walls 12, 12 of the pedal bracket 10 via the opening portion 15. At this time, the lower surface of the engaging portion 33 of the connecting member 32a of the rear protrusions 32, 32 starts to touch the upper surface of the flange 15b provided at the end portion on the rearward direction side of the opening portion 15, and the front parts of the rear guide portions 38, 38 of the rear protrusions 32, 32 start to abut on and be engaged to the rear part of the flange 15b provided on the rear end portion of the opening portion 15. Therefore, the rotation operation of the retainer 30 is performed around the front parts of the rear guide portions 38, 38. The force component applied to the shaft 22a via the peripheries of the first hole portions 40a, 40a of the guide holes 40, 40 of the retainer 30 caused by the collision load applied to the retainer 30 becomes larger than the static friction force generated between the fastener 22 and the side walls 12, 12 of the pedal bracket 10 due to the fastening torque of the fastener 22. Therefore, with the rotation operation of the retainer 30, the shaft 22a moved rearward in the first hole portions 40a, 40a of the guide holes 40, 40 of the retainer 30 is released from the leading end hole portions 13a, 13a of the guide holes 13, 13 of the pedal bracket 10 and is moved toward the connecting hole portions 13b, 13b. As a result, the pedal arm 20 is rotated, by an angle θ1 in a clockwise direction in FIG. 8, about the connection point C at which the other end of the pushrod 28 is connected to the master vac., and the treadle portion 24 of the pedal arm 20 starts to recede forward.

Subsequently, as shown in FIG. 9, when the connecting member 32a of the rear protrusions 32, 32 of the retainer 30 is pressed forward further by the constituent member B of the vehicle body, the front guide portions 36, 36 of the rear protrusions 32, 32 are pressed and slide downward while abutting on the front end portion 15a of the opening portion 15 of the upper wall 14, and the retainer 30 rotates so that the forward direction side of the retainer 30 moves downward further. The retainer 30 further recedes between the side walls 12, 12 of the pedal bracket 10 via the opening portion 15. At this time, the lower surface of the engaging portion 33 of the connecting member 32a of the rear protrusions 32, 32 smoothly slides on the upper surface of the flange 15b provided at the end portion on the rearward direction side of the opening portion 15, and the upper surfaces of the rear guide portions 38, 38 of the rear protrusions 32, 32 start to be engaged to the lower part of the flange 15b provided at the end portion on the rearward direction side of the opening portion 15. Therefore, the rotation operation of the retainer 30 is performed around the rear guide portions 38, 38, which have started to be engaged to the lower part of the flange 15b, and starts to be accelerated. In conjunction therewith, the shaft 22a reaches between the first hole portions 40a, 40a and the second hole portions 40b, 40b of the guide holes 40, 40 of the retainer 30, and starts to enter into the connecting hole portions 13b, 13b of the guide holes 13, 13 of the pedal bracket 10. As a result, the pedal arm 20 is rotated about the connection point C by an angle θ2 larger than the angle θ1 in the clockwise direction in FIG. 9, and the treadle portion 24 of the pedal arm 20 recedes further forward.

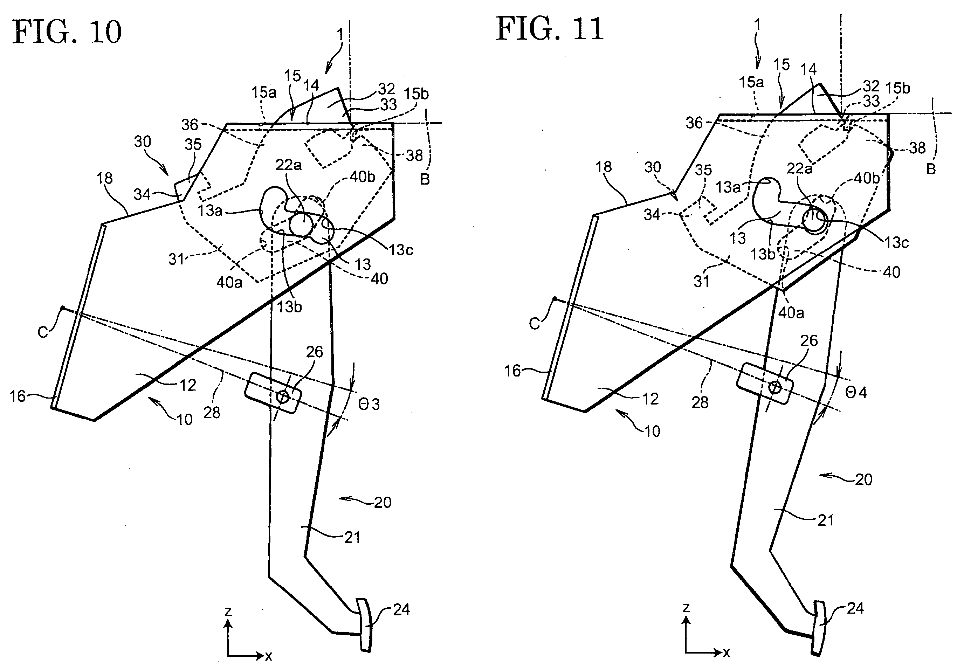

Subsequently, as shown in FIG. 10, when the connecting member 32a of the rear protrusions 32, 32 of the retainer 30 is pressed forward further by the constituent member B of the vehicle body, while the front guide portions 36, 36 of the rear protrusions 32, 32 are released and separated from the front end portion 15a of the opening portion 15 of the upper wall 14, the retainer 30 rotates so that the forward direction side of the retainer 30 moves further downward. The retainer 30 recedes further between the side walls 12, 12 of the pedal bracket 10 via the opening portion 15. At this time, the lower surface of the engaging portion 33 of the connecting member 32a of the rear protrusions 32, 32 continues to slide smoothly on the upper surface of the flange 15b provided at the end portion on the rearward direction side of the opening portion 15, and the upper surfaces of the rear guide portions 38, 38 of the rear protrusions 32, 32 are engaged to the lower part of the flange 15b provided at the end portion on the rearward direction side of the opening portion 15. Therefore, the rotation operation of the retainer 30 is performed around the rear guide portions 38, 38 engaged to the lower part of the flange 15b, and starts to be accelerated further. Inconjunction therewith, the shaft 22a starts to enter into the second hole portions 40b, 40b of the guide holes 40, 40 of the retainer 30, and in accordance therewith, the shaft 22a moves in the connecting hole portions 13b, 13b of the guide holes 13, 13 of the pedal bracket 10. As a result, the pedal arm 20 is rotated about the connection point C by a larger angle θ3 in the clockwise direction in FIG. 10, and the treadle portion 24 of the pedal arm 20 recedes further forward.

Subsequently, as shown in FIG. 11, when the connecting member 32a of the rear protrusions 32, 32 of the retainer 30 is pressed forward further by the constituent member B of the vehicle body, the retainer 30 rotates around the rear guide portions 38, 38 engaged to the lower part of the flange 15b provided at the end portion on the rearward direction side of the opening portion 15, so that the forward direction side of the retainer 30 moves downward further in the state where the upper surfaces of the rear guide portions 38, 38 of the rear protrusions 32, 32 are engaged to the lower part of the flange 15b, and the retainer 30 recedes further between the side walls 12, 12 of the pedal bracket 10 via the opening portion 15. At this time, the lower surface of the engaging portion 33 of the connecting member 32a of the rear protrusions 32, 32 continues to slide smoothly on the upper surface of the flange 15b provided at the end portion on the rearward direction side of the opening portion 15. In conjunction therewith, the shaft 22a moves in the second hole portions 40b, 40b of the guide holes 40, 40 of the retainer 30, and in accordance therewith, the shaft 22a starts to enter into the terminal end hole portions 13c, 13c of the guide holes 13, 13 of the pedal bracket 10. As a result, the pedal arm 20 is rotated about the connection point C by a larger angle θ4 in the clockwise direction in FIG. 11, and the treadle portion 24 of the pedal arm 20 recedes further forward.

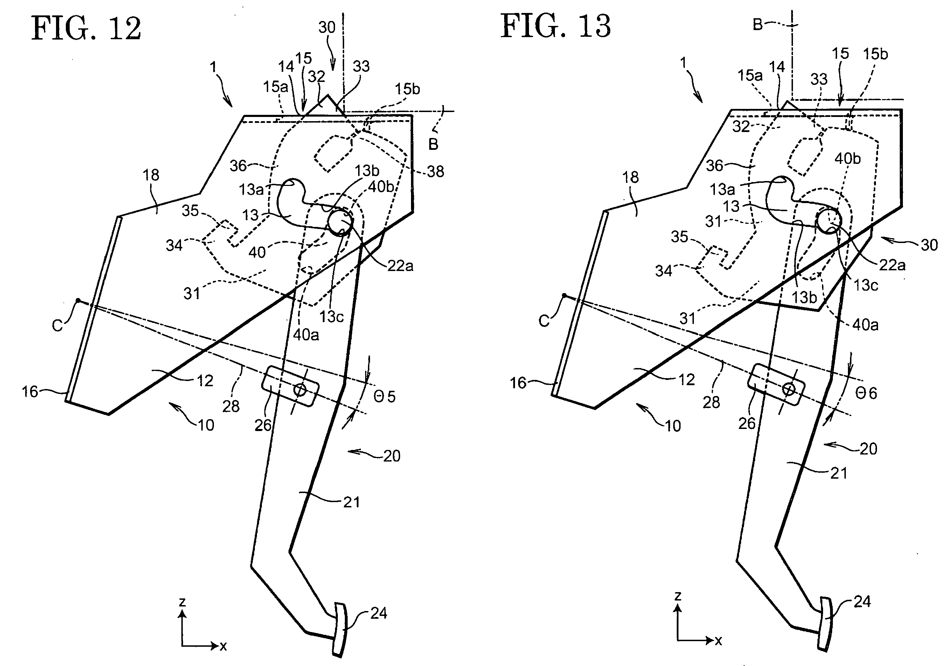

Subsequently, as shown in FIG. 12, when the connecting member 32a of the rear protrusions 32, 32 of the retainer 30 is pressed forward further by the constituent member B of the vehicle body, the forward direction side of the retainer 30 further moves downward, and the retainer 30 rotates about the central axis of the shaft 22a of the fastener 22 extending in the y-axis direction as a rotation axis, so that the rear protrusions 32, 32 recede further between the side walls 12, 12 of the pedal bracket 10 via the opening portion 15, and the engaging portion 33 of the connecting member 32a is separated from the upper surface of the flange 15b provided at the end portion on the rearward direction side of the opening portion 15. Simultaneously, the upper surfaces of the rear guide portions 38, 38 of the rear protrusions 32, 32 are released from the lower part of the flange 15b provided at the end portion on the rearward direction side of the opening portion 15, and the upper ends of the rear protrusions 32, 32 become a state abutting on the lower part of the flange 15b. At this time, the shaft 22a approaches the rear end sides of the second hole portions 40b, 40b of the guide holes 40, 40 of the retainer 30, and in accordance therewith, reaches the terminal end hole portions 13c, 13c of the guide holes 13, 13 of the pedal bracket 10. As a result, the pedal arm 20 is rotated about the connection point C by a larger angle θ5 in the clockwise direction in FIG. 12, and the treadle portion 24 of the pedal arm 20 recede further forward. It can be considered that the angle θ5 is substantially the largest angle for the pedal arm 20 to recede.

Subsequently, as shown in FIG. 13, the upper surfaces of the rear guide portions 38, 38 of the rear protrusions 32, 32 of the retainer 30 are released and separated from the lower part of the flange 15b provided at the end portion on the rearward direction side of the opening portion 15. When the retainer rotates about the central axis of the shaft 22a of the fastener 22 extending in the y-axis direction so that the forward direction side of the retainer 30 moves downward further in a state where the upper ends of the rear protrusions 32, 32 are abutting on the lower part of the flange 15b, the rear protrusions 32, 32 recede further between the side walls 12, 12 of the pedal bracket 10 via the opening portion 15. At this time, the shaft 22a reaches the rear end sides of the second hole portions 40b, 40b of the guide holes 40, 40 of the retainer 30, in a state of being accommodated in the terminal end hole portions 13c, 13c of the guide holes 13, 13 of the pedal bracket 10. As a result, the rear protrusions 32, 32 reach a state of receding further between the side walls 12, 12 of the pedal bracket 10 via the opening portion 15 until the connecting member 32a of the rear protrusions 32, 32 of the retainer 30 is separated from the constituent member B of the vehicle body. Furthermore, the pedal arm 20 is substantially maintained in a receding state where the pedal arm 20 is rotated about the connection point C by an angle θ6 in the clockwise direction in FIG. 13. The angle θ6 is substantially equal to the angle θ5.

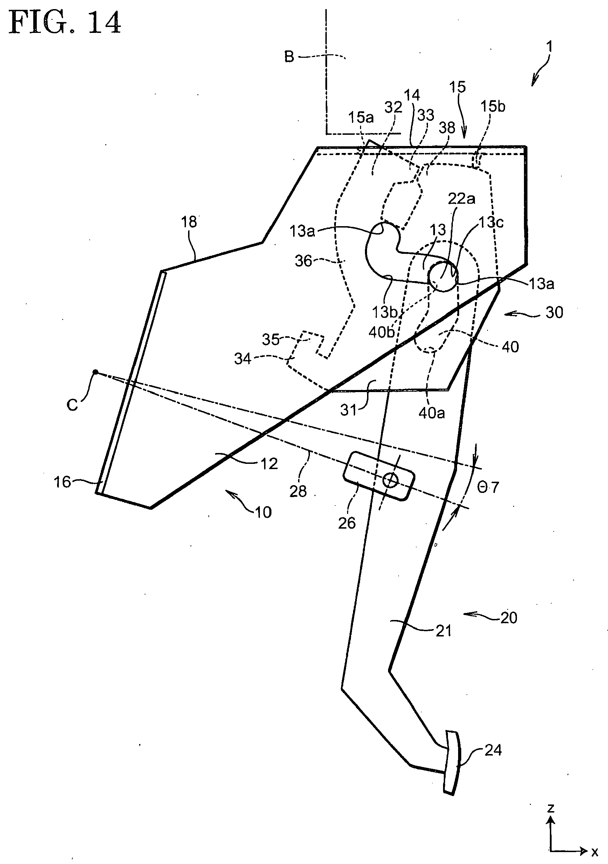

Subsequently, as shown in FIG. 14, when the shaft 22a has abutted on the rear ends of the second hole portions 40b, 40b of the guide holes 40, 40 of the retainer 30 in the state of being accommodated in the terminal end hole portions 13c, 13c of the guide holes 13, 13 of the pedal bracket 10, the rotation operation of the retainer 30 finishes in the state where the upper ends of the rear protrusions 32, 32 of the retainer 30 is abutting on the lower part of the flange 15b, and the forward direction side of the retainer 30 finishes downward movement. At this time, the rear protrusions 32, 32 of the retainer 30 become a state of having moved back almost completely between the side walls 12, 12 of the pedal bracket 10 via the opening portion 15, and the constituent member B of the vehicle body has passed above the connecting member 32a of the rear protrusions 32, 32, while maintaining a gap therebetween. Furthermore, the pedal arm 20 is substantially maintained in the receding where the pedal arm 20 is rotated about the connection point C by an angle θ7 in the clockwise direction in FIG. 14. Further, because the upper ends of the rear protrusions 32, 32 are substantially maintained in the state abutting on the lower part of the flange 15b, the retainer 30 does not interfere with the constituent member B of the vehicle body by moving upward unnecessarily. In accordance therewith, the shaft 22a is held in the terminal end hole portions 13c, 13c of the guide holes 13, 13 of the pedal bracket 10 via the second hole portions 40b, 40b of the guide holes 40, 40 of the retainer 30. Therefore, the receding posture of the pedal arm 20 is reliably held to reliably suppress disadvantages such that the pedal arm 20 moves unnecessarily toward a driver. The angle θ7 is substantially equal to the angle θ5.

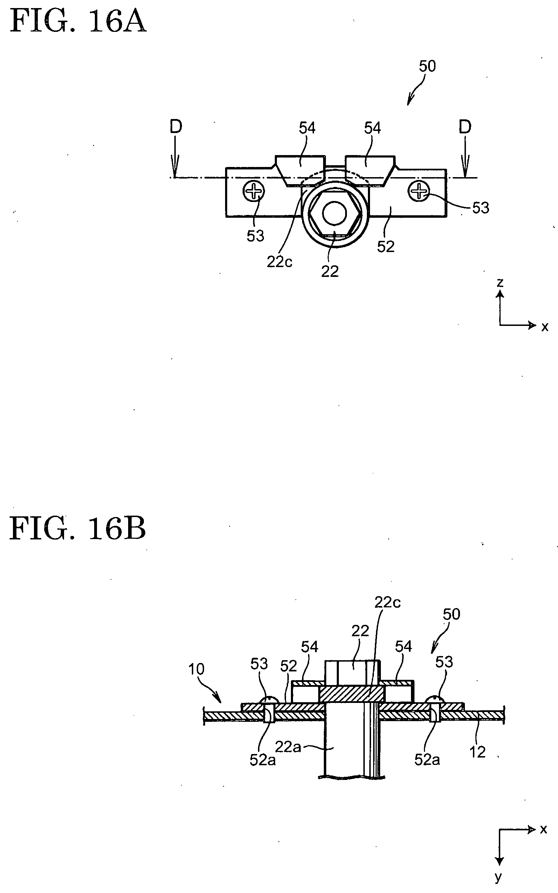

In the pedal device 1 having the configuration described above, various modifications can be considered. Therefore, modifications thereof are explained below in detail also with reference to FIGS. 15A, 15B, 15C, 16A and 16B.

FIG. 15A is a schematic partial sectional view in order showing an assembly procedure of a pedal device according to a modification of the present embodiment, and shows a state immediately before engaging a retainer to a pedal bracket, FIG. 15B is a schematic partial sectional view in order showing the assembly procedure of the pedal device according to the modification of the present embodiment, and shows a state where the retainer is engaged to the pedal bracket, and FIG. 15C is a schematic partial sectional view in order showing the assembly procedure of the pedal device according to the modification of the present embodiment, and shows a state where the retainer has been attached to the pedal bracket.

As shown in FIGS. 15A, 15B, and 15C, in the present modification, the shaft 22a of the fastener 22 has a flat portion 22b in which a part of the circumferential surface thereof is replaced by a flat surface. Other parts of the configuration including those not shown in FIGS. 15A, 15B, and 15C are the same as the configuration described above. The flat portion 22b is not limited to the flat surface, and can be formed of a curved surface.

To assemble the pedal device 1 by applying the fastener 22 having such a configuration, as shown in FIG. 15A, the retainer 30 is first inserted, and the rear protrusions 32, 32 of the retainer 30 are pulled out so as to protrude on the upper wall 14 via the opening portion 15 of the upper wall 14 in the pedal bracket 10. The engaging portion 33, which is the lower end portion of the connecting member 32a that connects the rear protrusions 32, 32, is placed on the upper wall 14, and the front protrusions 34, 34 of the retainer 30 are pulled out from the front end portion of the upper wall 14 so as to protrude on the upper wall 14. The retainer 30 is then moved rearward with respect to the pedal bracket 10, in a state with the engaging portions 35, 35, which are the rear end portions of the front protrusions 34, 34, being placed respectively on the upper wall 14.

Subsequently, as shown in FIG. 15B, the engaging portion 33 of the rear protrusions 32, 32 of the retainer 30 is positioned at the rear-side end portion of the upper wall 14, the retainer 30 is then pressed downward so that the engaging portion 33 is engaged to the rear-side end portion of the upper wall 14, and the engaging portions 35, 35 of the front protrusions 34, 34 are respectively pressed against the upper surface of the upper wall 14. At this time, by appropriately rotating the pedal arm 20 about the shaft 22a of the fastener 22 as a rotation axis, the shaft 22a of the fastener 22 is rotated at a position where the shaft 22a penetrates through the leading end hole portions 13a, 13a of the guide holes 13, 13 of the pedal bracket 10 and the front end sides of the first hole portions 40a, 40a of the guide holes 40, 40 of the retainer 30, to rotate the flat portion 22b thereof downward. The flat portion 22b is then caused to abut on the respective end portions of the side walls 31, 31 of the retainers 30, 30 at the lower edges of the first hole portions 40a, 40a.

Subsequently, as shown in FIG. 15C, the shaft 22a of the fastener 22 is further rotated at the position where the shaft 22a penetrates through the leading end hole portions 13a, 13a of the guide holes 13, 13 of the pedal bracket 10 and the front end sides of the first hole portions 40a, 40a of the guide holes 40, 40 of the retainer 30 by appropriately rotating the pedal arm 20 about the shaft 22a of the fastener 22 as the rotation axis, to rotate the flat portion 22b thereof upward. The circumferential surface of the shaft 22a is then positioned lower than the flat portion 22b, and presses the respective end portions of the side walls 31, 31 of the retainers 30, 30 downward at the lower edges of the first hole portions 40a, 40a. As a result, because the retainer 30 is pressed downward, the rear protrusions 32, 32 and the front protrusions 34, 34 are pressed against the upper wall 14 of the pedal bracket 10, so that the engaging portion 33 is strongly engaged to the rear end portion of the upper wall 14 and the rear protrusions 32, 32 strongly abut on the upper surface of the upper wall 14. Furthermore, the engaging portions 35, 35 of the front protrusions 34, 34 strongly press the upper surface of the upper wall 14 and are engaged, so that the front protrusions 34, 34 strongly abut on the upper surface of the upper wall 14, thereby reliably suppressing disadvantages such that the retainer 30 is unnecessarily released from the pedal bracket.

FIG. 16A shows a configuration of a holding member of a pedal device according to another modification of the present embodiment, and shows a side view of the holding member attached to the pedal bracket, and FIG. 16B shows a configuration of the holding member of the pedal device according to the another modification of the present embodiment, and shows a sectional view along a line D-D in FIG. 16A.

As shown in FIGS. 16A and 16B, in the present modification, a holding member 50 is attached to the pedal bracket 10. Other parts of the configuration including those not shown in FIGS. 16A and 16B are the same as the configuration of the present embodiment including the modification described above.

The holding member 50 is typically made of metal such as an iron material, and includes a body 52 having a flat shape, fasteners 53, 53 respectively fastened to the pedal bracket 10 by screwing or the like via insertion holes 52a, 52a formed penetrating through the body 52, and holding portions 54, 54 respectively holding an upper peripheral edge of a flange 22c of the fastener 22 therebetween, which are folded portions folded back from the body 52.

The holding member 50 is for holding the upper peripheral edge of the flange 22c of the fastener 22 by the holding portions 54, 54. Therefore, it is reliably restricted that the fastener 22 unnecessarily moves upward and is deviated from the leading end hole portions 13a, 13a of the guide holes 13, 13 of the pedal bracket 10. Furthermore, because the holding members 54, 54 only hold the upper peripheral edge of the flange 22c of the fastener 22 therebetween, respectively, when the shaft 22a of the fastener 22 moves along the guide holes 13, 13 of the pedal bracket 10, the upper peripheral edge of the flange 22c is released to allow the shaft 22a to move downward. Therefore, it is suppressed that the movement of the shaft 22a is blocked.

According to the configuration of the present embodiment, as described above, the first guide hole 13 provided in the pedal bracket 10 attached to the vehicle body includes the leading end hole portion 13a that defines the position of the shaft members 22, 22a for realizing the normal operating state with respect to the pedal arm 20, the terminal end hole portion 13c that defines the position of the shaft members 22, 22a for realizing the receding state where the treadle portion 24 relatively moves in the forward direction of the vehicle body with respect to the pedal arm 20, and the connecting hole portion 13b that connects the leading end hole portion 13a and the terminal end hole portion 13c so that the shaft members 22, 22a can freely move, and allows the pedal arm 20 to rotate around the other end side of the pushrod 28 so that the treadle portion 24 relatively moves in the forward direction as the shaft members 22, 22a move from the leading end hole portion 13a side toward the terminal end hole portion 13c side. Furthermore, the second guide hole 40 engaged and attached to the pedal bracket 10 by the engaging portions 33 and 35 includes the first hole portion 40a and the second hole portion 40b connected to each other. The first hole portion 40a extends in the front-rear direction of the vehicle body to allow the retainer 30 to relatively move in the forward direction so that the engaging portions 33 and 35 are released from the pedal bracket 10 in the state with the shaft members 22, 22a being positioned in the leading end hole portion 13a, and the second hole portion 40b allows the retainer 30 to rotate about the shaft members 22, 22a so that the forward direction side of the retainer 30 moves in the downward direction of the vehicle body, while the shaft members 22, 22a are moved from the leading end hole portion 13a to the terminal end hole portion 13c. Consequently, at the time of a frontal collision or the like of a vehicle, the pedal arm 20 can be reliably receded from a passenger side such as a driver, and the retainer 30, which is the control member for realizing the receding state of the pedal arm 20, can be receded from the vehicle body side, in a simple configuration in which the first guide hole 13 and the second guide hole 40 can cooperate with each other.

Further, in the normal operating state of the pedal arm 20, when the upper part of the retainer 30 is in the protruding state from the opening portion 15 provided in the upper wall 14 of the pedal bracket 10 in the upward direction of the vehicle body, and the forward direction side of the retainer 30 moves in the downward direction, the first guide portion 36 provided in the upper part of the retainer 30 can freely slide, while abutting on the end portion 15a on the forward direction side of the opening portion 15. Consequently, at the time of a frontal collision or the like of the vehicle, the behavior of causing the retainer 30 to recede from the vehicle body side can be reliably generated.

When the forward direction side of the retainer 30 moves in the downward direction, the second guide portion 38 provided on the rearward direction side of the vehicle body than the first guide portion 36 in the retainer 30 can be freely engaged to the flange 15b provided at the end portion on the rearward direction side of the opening portion 15 of the pedal bracket 10. Consequently, at the time of a frontal collision or the like of the vehicle, the behavior of causing the retainer 30 to recede from the vehicle body side can be reliably accelerated.

When the shaft members 22, 22a are positioned in the second hole portion 40b in the retainer 30 and the terminal end hole portion 13c in the pedal bracket 10, the retainer 30 is in the receding state inside the pedal bracket 10. Consequently, at the time of a frontal collision or the like of the vehicle, the retainer 30 can be reliably receded from the vehicle body side in the state with the pedal arm being reliably receded from a passenger side such as a driver.

Furthermore, because the retainer 30 includes the first engaging portion 35 that engages the upper front end of the pedal bracket 10 and the second engaging portion 33 that engages the upper rear end of the pedal bracket 10, in the normal operating state of the pedal arm 20, the retainer 30 can be fixed to the pedal bracket 10 more strongly, thereby enabling to realize an accurate operation of the pedal arm 20 more reliably.

The second engaging portion 35 has the connecting member 32a provided to stand up in the vertical direction of the vehicle body while extending in the horizontal direction, to engage the rear end portion of the upper wall 14 of the pedal bracket 10 by the lower end portion of the connecting member 32a. Consequently, in the normal operating state of the pedal arm 20, the retainer 30 can be fixed strongly to the pedal bracket 10 more reliably, while reinforcing the strength and stiffness of the retainer 30, thereby enabling to realize an accurate operation of the pedal arm 20 more reliably.

The shaft members 22, 22a have the flat portion 22b in which a part of the circular shape is flattened in the sectional shape of the shaft members 22, 22a penetrating through the first guide hole 13 and the second guide hole 40. Consequently, in the normal operating state of the pedal arm 20, the retainer 30 can be strongly pressed against and fixed to the pedal bracket 10 more reliably, thereby enabling to realize an accurate operation of the pedal arm 20 more reliably.

Furthermore, by providing the restricting member 50 that restricts the shaft members 22, 22a to move in the upward direction of the vehicle body exceeding the leading end hole portion 13a, in the normal operating state of the pedal arm 20, the shaft members 22, 22a can be held more.reliably, thereby enabling to realize an accurate operation of the pedal arm 20 more reliably. Further, at the time of a frontal collision or the like of the vehicle, it is reliably suppressed that the shaft members 22, 22a move upward unnecessarily, and the pedal arm 20 can be receded from a passenger side such as a driver more reliably, and the retainer 30 can be receded from the vehicle body side reliably.

In the present invention, the shape, the arrangement, the number, and the like of the members are not limited to those in the embodiments explained above, and it is needless to mention that the constituent elements can be modified as appropriate without departing from the scope of the invention, such as appropriately replacing these elements by other ones having identical operational effects.

As described above, according to the present invention, a pedal device that can recede the pedal arm from a passenger side such as a driver reliably at the time of a frontal collision or the like of a vehicle, and can recede the retainer as a control member for realizing the receding posture of the pedal arm from the vehicle body side reliably can be provided in a simple configuration. Therefore, because of its general purposes and universal characteristics, applications of the present invention can be expected in a wide range in the field of a pedal device of a movable body such as an automobile.

In a pedal device that can recede a pedal arm from a passenger side such as a driver reliably and can recede a retainer as a control member for realizing a receding posture of the pedal arm from a vehicle body side reliably at the time of a frontal collision or the like of a vehicle, a first guide hole provided in a pedal bracket attached to the vehicle body includes a leading end hole portion, a terminal end hole portion, and a connecting hole portion that connects the leading end hole portion and the terminal end hole portion, and a second guide hole provided in a retainer engaged and attached to the pedal bracket by engaging portions includes a first hole portion and a second hole portion connected to each other.

## Claims

1. A pedal device comprising:
a pedal bracket (10) having a first guide hole (13) as elongated one to be attached to a vehicle body;
a retainer (30) having a long second guide hole (40) as elongated one, and an engaging portion (33, 35) to be engaged and attached to the pedal bracket (10) by the engaging portion (33, 35); and
a pedal arm (20) having an arm body (21) to be attached with one end of a pushrod (28) coupled with the vehicle body side, a through hole (21 a) provided at an upper end portion of the arm body, a treadle portion (24) provided at a lower end portion of the arm body, and a shaft member (22, 22a) inserted into the through hole (21 a), the first guide hole (13), and the second guide hole (40) to be rotatable about the shaft member (22a) as a rotation axis,
**characterized in that** the first guide hole (13) is provided with:
a leading end hole portion (13a) that defines a position of the shaft member (22a) for realizing a normal operating state with respect to the pedal arm (20);
a terminal end hole portion (13c) that defines the position of the shaft member (22a) for realizing a receding state where the treadle portion (24) relatively moves in a forward direction of the vehicle body with respect to the pedal arm (20); and
a connecting hole portion (13b) that connects the leading end hole portion (13a) and the terminal end hole portion (13c) so that the shaft member (22, 22a) is movable therethrough, and allows the pedal arm (20) to rotate around the other end side of the pushrod (28) so that the treadle portion (24) relatively moves in the forward direction, as the shaft member (22, 22a) moves from the leading end hole portion side to the terminal end hole portion side,
and the second guide hole (40) is provided with:
a first hole portion (40a) extending in a front-rear direction of the vehicle body so as to allow the retainer (30) to relatively move in the forward direction so that the engaging portion (33; 35) is released from the pedal bracket (10) in a state with the shaft member (22, 22a) being positioned in the leading end hole portion (13a); and
a second hole portion (40b) connected to the first hole portion (40a) so as to allow the retainer (30) to rotate about the shaft member (22, 22a) so that the forward direction side of the retainer (30) moves in a downward direction of the vehicle body, while the shaft member (22, 22a) is moved from the leading end hole portion (13a) to the terminal end hole portion (13c).

2. The pedal device according to claim 1, wherein in the normal operating state of the pedal arm (20), when an upper part of the retainer (30) is in a protruding state from an opening portion (15) provided in an upper wall (14) of the pedal bracket (10) in an upward direction of the vehicle body, and the forward direction side of the retainer (30) moves in the downward direction, a first guide portion (36), provided in an upper part of the retainer (30), is slidable, while abutting on an end portion (15a) on the forward direction side of the opening portion (15).

3. The pedal device according to claim 2, wherein when the forward direction side of the retainer (30) moves in the downward direction, a second guide portion (38), provided on a rearward direction side of the vehicle body than the first guide portion (36) in the retainer (30), is capable of engaging to a flange (15b) provided at an end portion on the rearward direction side of the opening portion (15) of the pedal bracket (10).

4. The pedal device according to any of claims 1 to 3, wherein when the shaft member (22, 22a) is positioned in the second hole portion (40b) of the second guide hole (40) in the retainer (30) and the leading end hole portion (13a) of the first guide hole (13) in the pedal bracket (10), the treadle portion (24) of the pedal arm (20) is positioned at a position in the most forward direction and the retainer (30) is in a state of being receded farthest inside the pedal bracket (10).

5. The pedal device according to any of claims 1 to 4, wherein the retainer (30) includes a first engaging portion (35) that engages an upper front end of the pedal bracket and a second engaging portion (33) that engages an upper rear end of the pedal bracket.

6. The pedal device according to claim 5, wherein the second engaging portion (33) has a connecting member (32a) provided to stand up in a vertical direction of the vehicle body while extending in a horizontal direction, to engage a rear end portion of the upper wall (14) of the pedal bracket (10) by a lower end portion of the connecting member (32a).

7. The pedal device according to any of claims 1 to 6, wherein the shaft member (22, 22a) has a flat portion (22b) in which a part of a circular shape is flattened in a sectional shape of the shaft member (22, 22a) penetrating through the first guide hole (13) and the second guide hole (40).

8. The pedal device according to any of claims 1 to 7, wherein the pedal bracket (10) further includes a restricting member (50) that restricts the shaft member (22, 22a) to move in an upward direction of the vehicle body exceeding the leading end hole portion (13a).

## Patentansprüche

1. Pedalvorrichtung, welche aufweist:
einen Pedalträger (10), der ein längliches erstes Führungsloch (13) aufweist, zum Anbringen einer Fahrzeugkarosserie;
einen Halter (30), der ein längliches zweites Führungsloch (40) sowie einen Eingriffsabschnitt (33, 35) zum Eingriff mit und Anbringen an dem Pedalträger (10) durch den Eingriffsabschnitt (33, 35) aufweist; und
einen Pedalhebel (20), der einen Hebelkörper (21) zum Anbringen an einem Ende einer mit der Fahrzeugkarosserieseite gekoppelten Schubstange (28) aufweist; ein Durchgangsloch (21a), das an einem oberen Endabschnitt des Hebelkörpers vorgesehen ist; einen Tretabschnitt (24), der an einem unteren Endabschnitt des Hebelkörpers vorgesehen ist; sowie ein Schaftelement (22, 22a), das in das Durchgangsloch (21a), das erste Führungsloch (13) und das zweite Führungsloch (40) so eingesetzt ist, dass es um das Schaftelement (22a) als Drehachse herum drehbar ist,
**dadurch gekennzeichnet, dass** das erste Führungsloch (13) versehen ist mit:
einem Vorderende-Lochabschnitt (13a), der eine Position des Schaftelements (22a) zum Realisieren eines normalen Betriebszustands in Bezug auf den Pedalhebel (20) definiert;
einen Hinterende-Lochabschnitt (13c), der die Position des Schaftelements (22a) zum Realisieren eines Rücksetzzustands definiert, wo sich der Tretabschnitt (24) relativ in vorwärtiger Richtung der Fahrzeugkarosserie in Bezug auf den Pedalhebel (20) bewegt; und
einen Verbindungslochabschnitt (13b), der den Vorderende-Lochabschnitt (13a) und den Hinterende-Lochabschnitt (13c) verbindet, so dass das Schaftelement (22, 22a) dort hindurch bewegbar ist, und eine Drehung des Pedalhebels (20) um die andere Endseite der Schubstange (28) herum erlaubt, so dass sich der Tretabschnitt (24) relativ in der vorwärtigen Richtung bewegt, wenn sich das Schaftelement (22, 22a) von der Vorderende-Lochabschnitt-Seite zur Hinterende-Lochabschnitt-Seite bewegt, und
das zweite Führungsloch (40) versehen ist mit:
einem ersten Lochabschnitt (40a), der sich in Vorne-Hinten-Richtung der Fahrzeugkarosserie erstreckt, um zu erlauben, dass sich der Halter (30) relativ in der vorwärtigen Richtung bewegt, so dass der Eingriffsabschnitt (33, 35) von dem Pedalträger (10) in einem Zustand gelöst wird, in dem das Schaftelement (22, 22a) in dem Vorderende-Lochabschnitt (13a) angeordnet ist; und
einen zweiten Lochabschnitt (40b), der mit dem ersten Lochabschnitt (40a) verbunden ist, um eine Drehung des Halters (30) um das Schaftelement (22, 22a) herum zu erlauben, so dass sich die vorwärtige Seite des Halters (30) in abwärtiger Richtung der Fahrzeugkarosserie bewegt, während das Schaftelement (22, 22a) von dem Vorderende-Lochabschnitt (13a) zu dem Hinterende-Lochabschnitt (13c) bewegt wird.

2. Die Pedalvorrichtung nach Anspruch 1, wobei im normalen Betriebszustand des Pedalhebels (20), wenn ein oberes Teil des Halters (30) in einem von einem Öffnungsabschnitt (15), der in einem oberen Rand (14) des Pedalträgers (10) vorgesehen ist, in aufwärtiger Richtung der Fahrzeugkarosserie vorstehenden Zustand ist, und sich die vorwärtige Seite des Halters (30) in der abwärtigen Richtung bewegt, ein erster Führungsabschnitt (36), der in einem oberen Teil des Halters (30) vorgesehen ist, verschiebbar ist, während er sich auf einem Endabschnitt (15a) an der vorwärtigen Seite des Öffnungsabschnitts (15) abstützt.

3. Die Pedalvorrichtung nach Anspruch 2, wobei, wenn sich die vorwärtige Seite des Halters (30) in der abwärtigen Richtung bewegt, ein zweiter Führungsabschnitt (38), der an einer weiter rückwärtigen Seite der Fahrzeugkarosserie als der erste Führungsabschnitt (36) im Halter (30) vorgesehen ist, mit einem Flansch (15b) in Eingriff bringbar ist, der an einem Endabschnitt an der rückwärtigen Seite des Öffnungsabschnitts (15) des Pedalträgers (10) vorgesehen ist.

4. Die Pedalvorrichtung nach einem der Ansprüche 1 bis 3, wobei, wenn das Schaftelement (22, 22a) in dem zweiten Lochabschnitt (40b) des zweiten Führungslochs (40) in dem Halter (30) und dem Vorderende-Lochabschnitt (13a) des ersten Führungslochs (13) in dem Pedalträger (10) angeordnet ist, der Tretabschnitt (24) des Pedalhebels (20) an einer äußerst vorwärtigen Position angeordnet ist, und der Halter (30) in einem am weitesten innerhalb des Pedalträgers (10) zurückgesetzten Zustand ist.

5. Die Pedalvorrichtung nach einem der Ansprüche 1 bis 4, wobei der Halter (30) einen ersten Eingriffsabschnitt (35) enthält, der mit einem oberen vorderen Ende des Pedalträgers in Eingriff steht, sowie einen zweiten Eingriffsabschnitt (33), der mit einem oberen hinteren Ende des Pedalträgers in Eingriff steht.

6. Die Pedalvorrichtung nach Anspruch 5, wobei der zweite Eingriffsabschnitt (33) ein Verbindungselement (32a) aufweist, das so vorgesehen ist, dass es in vertikaler Richtung der Fahrzeugkarosserie hochsteht, während sich in horizontaler Richtung erstreckt, zum Eingriff mit einem hinteren Endabschnitt der oberen Wand (14) des Pedalträgers (10) durch einen unteren Endabschnitt des Verbindungselements (32a).

7. Die Pedalvorrichtung nach einem der Ansprüche 1 bis 6, wobei das Schaftelement (22, 22a) einen flachen Abschnitt (22b) aufweist, in dem ein Teil einer Kreisform in einer Querschnittsform des Schaftelements (22, 22a) abgeflacht ist, das durch das erste Führungsloch (13) und das zweite Führungsloch (40) hindurch geht.

8. Die Pedalvorrichtung nach einem der Ansprüche 1 bis 7, wobei der Pedalträger (10) ferner ein Begrenzungselement (50) enthält, das verhindert, dass sich das Schaftelement (22, 22a) in aufwärtiger Richtung der Fahrzeugkarosserie über den Vorderende-Lochabschnitt (13a) hinaus bewegt.

## Revendications

1. Dispositif de pédale comprenant :
un support de pédale (10) comportant un premier trou de guidage (13) de forme allongée, devant être fixé à un châssis de véhicule ;
un dispositif de retenue (30) comportant un second trou de guidage (40) long et de forme allongée, et une portion d'enclenchement (33, 35) devant être enclenchée et fixée au support de pédales (10) par la portion d'enclenchement (33, 35) ; et
un levier de pédale (20) comportant un corps de levier (21) devant être fixé avec une extrémité d'une tige de poussée (28) couplée au côté châssis de véhicule, un trou traversant (21a) prévu à une portion d'extrémité supérieure du corps de levier, une portion de pédale à double effet (24) prévue à une portion d'extrémité inférieure du corps de levier, et un organe formant arbre (22, 22a) inséré dans le trou traversant (21a), le premier trou de guidage (13), et le second trou de guidage (40) pour pouvoir tourner autour de l'organe formant arbre (22a) en tant qu'axe de rotation,
**caractérisé en ce que** le premier trou de guidage (13) est muni :
d'une portion de trou d'extrémité avant (13a) qui définit une position de l'organe formant arbre (22a) pour effectuer un état de fonctionnement normal par rapport au levier de pédale (20) ;
d'une portion de trou d'extrémité terminale (13c) qui définit la position de l'organe formant arbre (22a) pour effectuer un état de recul où la portion de pédale à double effet (24) se déplace relativement dans une direction avant du châssis de véhicule par rapport au levier de pédale (20) ; et
d'une portion de trou de raccordement (13b) qui raccorde la portion de trou d'extrémité avant (13a) et la portion de trou d'extrémité terminale (13c), de sorte que l'organe formant arbre (22, 22a) puisse s'y déplacer, et permet la rotation du levier de pédale (20) autour de l'autre côté d'extrémité de la tige de poussée (28), de sorte que la portion de pédale à double effet (24) se déplace relativement dans la direction avant, à mesure que l'organe formant arbre (22, 22a) se déplace du côté portion de trou d'extrémité avant au côté portion de trou d'extrémité terminale,
et le second trou de guidage (40) est muni :
d'une première portion de trou (40a) s'étendant dans une direction avant-arrière du châssis de véhicule, de façon à permettre le déplacement relatif du dispositif de retenue (30) dans la direction avant, de sorte que la portion d'enclenchement (33, 35) soit libérée du support de pédale (10) dans un état où l'organe formant arbre (22, 22a) est positionné dans la portion de trou d'extrémité avant (13a) ; et
d'une seconde portion de trou (40b) raccordée à la première portion de trou (40a), de façon à permettre la rotation du dispositif de retenue (30) autour de l'organe formant arbre (22, 22a), de sorte que le côté direction avant du dispositif de retenue (30) se déplace dans une direction vers le bas du châssis de véhicule, alors que l'organe formant arbre (22, 22a) est déplacé de la portion de trou d'extrémité avant (13a) à la portion de trou d'extrémité terminale (13c).

2. Dispositif de pédale selon la revendication 1, dans lequel, à l'état de fonctionnement normal du levier de pédale (20), lorsqu'une partie supérieure du dispositif de retenue (30) est dans un état saillant à partir d'une portion d'ouverture (15) prévue dans une paroi supérieure (14) du support de pédales (10) dans une direction vers le haut du châssis de véhicule, et que le côté direction vers l'avant du dispositif de retenue (30) se déplace dans une direction vers le bas, une première portion de guidage (36), prévue dans une partie supérieure du dispositif de retenue (30), peut coulisser, tout en venant buter sur une portion d'extrémité (15a) du côté direction vers l'avant de la portion d'ouverture (15).

3. Dispositif de pédale selon la revendication 2, dans lequel, lorsque le côté direction vers l'avant du dispositif de retenue (30) se déplace dans la direction vers le bas, une seconde portion de guidage (38), prévue d'un côté direction vers l'arrière du châssis de véhicule par rapport à la première portion de guidage (36) dans le dispositif de retenue (30), peut s'enclencher à un collet (15b) prévu à une portion d'extrémité du côté direction vers l'arrière de la portion d'ouverture (15) du support de pédales (10).

4. Dispositif de pédale selon l'une quelconque des revendications 1 à 3, dans lequel, lorsque l'organe formant arbre (22, 22a) est positionné dans la seconde portion de trou (40b) du second trou de guidage (40) dans le dispositif de retenue (30) et la portion de trou d'extrémité avant (13a) du premier trou de guidage (13) dans le support de pédale (10), la portion de pédale à double effet (24) du levier de pédale (20) est positionnée en une position dans la direction le plus vers l'avant et le dispositif de retenue (30) est dans un état de recul le plus éloigné à l'intérieur du support de pédales (10).

5. Dispositif de pédale selon l'une quelconque des revendications 1 à 4, dans lequel le dispositif de retenue (30) comprend une première portion d'enclenchement (35) qui enclenche une extrémité avant supérieure du support de pédales et une seconde portion d'enclenchement (33) qui enclenche une extrémité arrière supérieure du support de pédales.

6. Dispositif de pédale selon la revendication 5, dans lequel la seconde portion d'enclenchement (33) comporte un organe de raccordement (32a) prévu pour s'élever dans une direction verticale du châssis de véhicule, tout en s'étendant dans une direction horizontale, afin d'enclencher une portion d'extrémité arrière de la paroi supérieure (14) du support de pédales (10) par une portion d'extrémité inférieure de l'organe de raccordement (32a).

7. Dispositif de pédale selon l'une quelconque des revendications 1 à 6, dans lequel l'organe formant arbre (22, 22a) comporte une portion plate (22b), dans laquelle une partie de forme circulaire est aplatie dans une forme en coupe de l'organe formant arbre (22, 22a) pénétrant à travers le premier trou de guidage (13) et le second trou de guidage (40).

8. Dispositif de pédale selon l'une quelconque des revendications 1 à 7, dans lequel le support de pédales (10) comporte en outre un organe de restriction (50) qui restreint le déplacement de l'organe formant arbre (22, 22a) dans une direction vers le haut du châssis de véhicule dépassant la portion de trou d'extrémité avant (13a).
